# EUROPÄISCHE PATENTSCHRIFT

(11) **EP 3 092 524 B1**
(45) Veröffentlichungstag und Bekanntmachung des Hinweises auf die Patenterteilung: **19.06.2019**
(21) Anmeldenummer: 14816125.0
(22) Anmeldetag: 21.11.2014
(51) Int. Cl.: G02C 1/00, G02C 5/02, G02C 5/12

(54) **BRILLENGLAS UND VERFAHREN ZU DESSEN HERSTELLUNG**
SPECTACLE LENS AND METHOD FOR THE PRODUCTION THEREOF
VERRE DE LUNETTE ET PROCÉDÉ POUR LE FABRIQUER

(30) Priorität: 10.01.2014 DE 102014000107
(43) Veröffentlichungstag der Anmeldung: 16.11.2016
(73) Patentinhaber: Technische Hochschule Köln, 50968 Köln (DE)
(72) Erfinder: LUDERICH, Jörg, 50679 Köln (DE); FRINGS, David, 47055 Duisburg (DE); PÖPPERL, Christian, 42697 Solingen (DE)
(74) Vertreter: Cohausz Hannig Borkowski Wißgott
(86) Internationale Anmeldenummer: PCT/EP2014/003115
(87) Internationale Veröffentlichungsnummer: WO 2015/104035

(56) Entgegenhaltungen:
- WO-A1-02/31584
- WO-A1-95/24669
- WO-A1-2013/149891
- DE-A1- 3 908 095
- US-A- 4 921 341

## Beschreibung

Die Erfindung betrifft ein Verfahren zum Verglasen einer Brillenfassung, mit einem Brillenglas, insbesondere ein solches mit einem Querschnitt senkrecht zur optischen Achse, der einer Brillenglasöffnung einer ausgewählten Brillenfassung oder bei randlosen oder teilgefassten Brillen einer ausgewählten Form entspricht und mit wenigstens einem auf dem Brillenglas, bevorzugt auf dem äußeren Rand und/ oder der Front- bzw. Rückfläche aufgebrachten Strukturelement. Die Erfindung betrifft auch ein Verfahren zur Herstellung eines solchen Brillenglases.

Ein solches Strukturelement kann z.B. nach dem bekannten Stand der Technik die Verbindung zwischen dem Brillenglas und der Brillenfassung herstellen.

Zumindest bei Brillen, die durch einen Optiker an den Brillenträger angepasst sind ist es zudem vorgesehen, dass durch eine solches Strukturelement und dessen Positionierung am / auf dem Brillenglas eine Zentrierung des Brillenglases bzgl. der optischen Achse des Auges des Brillenträgers erfolgt. Zumindest in einem solchen Fall weist ein Strukturelement auch die Funktion eines zentrierenden Strukturelements auf.

Das Strukturelement kann so ausgebildet werden, dass es in die Facettennut einer Brillenfassung eingreift und/oder den Faden einer Nylorfassung aufnimmt oder eine clipsbare Verbindung mit der Fassung realisiert.

Ein Brillenglas mit einem auf den Rand geklebten oder mit einem innenliegenden Hinterschnitt in eine umlaufende Nut im Rand des Brillenglases eingreifenden, verformbaren Profilring ist in der US -Patentschrift 4 921 341 beschrieben.

Ein Verfahren und eine Vorrichtung zum Anbringen eines Profilbandes auf dem konturbearbeiteten Rand eines sich drehenden Brillenglases ist in der DE 39 08 095 A1 beschrieben. Hierbei wird das Profilband, der Raumkurve des Glasrandes folgend, um den gesamten Umfang des Brillenglases gelegt. Dazu wird der Profilbandanfang eines endlosen Bandes mit dem Glasrand verbunden, im Abstand des Umfangs des Glases von dem Profilbandanfang eine Querperforierung in dem Profilband angebracht, das Glas gedreht und der Profilbandabschnitt in der Bewegungsrichtung des Profilbandes hinter der Perforierung angehalten, so dass die Perforierungsstelle reißt, wonach der hierdurch gebildete, neue Bandanfang für das nächste Brillenglas, das noch nicht mit dem Glasrand des ersten Brillenglases verbunden ist, nunmehr gegen den Rand des nächsten Brillenglases angedrückt und mit diesem verbunden wird. Dabei wird das Profilband aufgeklebt, aufgeschweißt oder aufgelasert.

Im Patent DE 100 50 007 C2 wird ein Verfahren zum Positionieren eines Profilbandes auf dem Rand eines Brillenglases beschrieben, das die Position des Profilbandes CNC-gesteuert entsprechend einem vorgegebenen Verlauf festlegt. Die Befestigung auf dem Brillenglas erfolgt dann durch Aktivieren oder Aushärten eines Klebers zwischen Profilring und Brillenglas.

Die in diesen Veröffentlichungen beschriebenen Verfahren beruhen auf dem Grundgedanken, die bislang auf Brillenglasschleifmaschinen aus dem Glasgrundmaterial angeschliffene Facette durch einen umlaufenden Profilstrang oder ein Profilband zu ersetzen.

Ebenfalls bekannt sind Verfahren, mit denen Brillenfassungen und Brillenlinsen mittels additiver Fertigungstechnologie hergestellt werden (siehe z.B. WO 2013/149891).

Zwar gibt es bei CNC-gesteuerten Brillenglasrandschleifmaschinen die Möglichkeit, den Facettenverlauf einer anzuschleifenden Facette dem Verlauf der Facettennut einer ausgewählten Brillenfassung anzupassen, jedoch ist das Brillenglas mit der angeschliffenen Facette vollkommen unelastisch, so dass Spannungen von der Brillenfassung auf die Brillengläser beim Einsetzen übertragen werden.

Auch durch Temperaturwechsel können Spannungen entstehen, gegen die insbesondere Kunststoffgläser empfindlich sind, die zur Rissbildung neigen. Ein aufgetragener Profilstrang könnte aus einem elastischen Material bestehen und so eine wesentlich bessere Anpassung zur Fassungsform ermöglichen.

Weiterhin würde sich der Fertigungsprozess wesentlich vereinfachen und den Einsatz alternativer Fertigungsverfahren, wie z.B. Laserschneiden, erlauben, da für die Erzeugung einer in Richtung der optischen Achse flachen oder nur leicht gewölbten Randausbildung ein zweidimensionales Fertigungsverfahren ausreichend ist.

Des Weiteren bedeutet das Anschleifen einer Facette einen zusätzlichen Arbeitsgang, der besonders die automatisierte Randbearbeitung wegen der erforderlichen Genauigkeit stark verlängert.

Die in den genannten Veröffentlichungen aufgezeigten Verfahren und Konzepte haben sich trotz der Vorteile gegenüber dem Stand der Technik im Markt bis heute nicht durchsetzen können. Bedingt wird diese u.a. durch die folgenden Punkte:
- Die Handhabung von separaten Profilbändern und Klebstoffen ist in der Praxis schwierig und erhöht die Komplexität der Maschinen signifikant
- Die Geometrie der aufgeklebten oder extrudierten Profilstränge kann nicht leicht an unterschiedliche Geometrien der Fassungsnut angepasst werden
- Brillengläser können lokal sehr dünne Randbereiche besitzen, das Aufbringen eines Profilstranges ist in diesen Bereichen schwierig, ein Überstehen des Profils über den Rand des Brillenglases wird nicht akzeptiert
- Die langzeitige Haltbarkeit und Belastbarkeit von Verbindungen mit Haftklebern, wie sie bei Profilbändern verwendet werden, ist unter Berücksichtigung der Umgebungseinflüsse (Sonnenlicht, Hautschweiß) kritisch

Aufgabe der Erfindung ist es, Brillengläser mit Strukturelementen, insbesondere zentrierenden Strukturelementen, sowie ein Verfahren zu Herstellung bereit zu stellen, bei denen die Geometrie (insbesondere der Querschnitt senkrecht zur Umfangsrichtung) und Positionierung eines Strukturelements auf der Randfläche des Brillenglases und/ oder dessen Front- und/oder Rückfläche frei definierbar ist. Eine weitere Aufgabe ist es, die oben genannten restriktiv wirkenden Punkte zu überwinden und zu ermöglichen, auf der einen Seite die heute bekannten Brillenfassungsarten schnell und einfach zu verglasen und auf der anderen Seite neue Brillenfassungsdesigns zu gestalten.

Weitere Aufgabe der Erfindung ist es, auf einem Brillenglas jegliche Art von Strukturelement auf einfache Weise anbringen zu können, um bestimmte gewünschte funktionale Wirkungen zu erzielen oder auch lediglich gewünschte Designs zu realisieren.

Diese Aufgaben werden gelöst durch ein Verfahren gemäß Anspruch 1.

Dabei wird bevorzugt auf die Randfläche und/oder die Frontfläche und/oder Rückfläche ein in flüssiger Phase vorliegender Werkstoff aufgetragen, der sich mit dem Glas stoffschlüssig verbindet und durch chemische Reaktion oder durch Bestrahlung mit elektromagnetischen Wellen, insbesondere UV-Licht gehärtet wird.

Hier kann die Erfindung vorsehen, dass das wenigstens eine Strukturelement ausschließlich nur durch diesen Werkstoff nach dessen Erhärtung gebildet wird.

Insbesondere wird unter einem Brillenglas im Sinne der Erfindung ein einzelnes Glas verstanden, bevorzugt also ein solches das (noch) nicht in einen Rahmen oder eine Fassung oder Teile davon eingesetzt ist und bereits in diesem Zustand das wenigstens eine Strukturelement aufweist. Ein Brillenglas kann somit bevorzugt ein rahmenloses / fassungsloses Brillenglas sein, insbesondere abgesehen von wenigstens einem bevorzugt erfindungsgemäßen Strukturelement bestehend lediglich aus dem Material, aus welchen das Brillenglas gefertigt ist, also insbesondere Glas oder Kunststoff.

Insbesondere wird unter einem Strukturelement im Sinne der Erfindung ein solches Element verstanden, das - insbesondere auch wenn es eine Verbindung zu einer Fassung herstellen soll - bereits alleine am ungefassten Brillenglas vorgesehen und existent ist, insbesondere nach Erhärtung, ggfs. sogar schon zuvor selbsttragend ist.

Wesentlicher Kerngedanke bei der Erfindung ist es, dass ein Strukturelement durch einen zunächst flüssig vorliegenden und nach Applikation auf dem Brillenglas kontrolliert durch chemische Reaktion oder Bestrahlung gehärteten Werkstoff ausgebildet wird, somit gegenüber dem Stand der Technik der Einsatz eines Fertigbauteils und eines Klebers zu dessen Verklebung entfällt und erfindungsgemäß durch den bei Applikation flüssigen Werkstoff eine grundsätzlich freie geometrische Form des Strukturelements gebildet werden kann. Vorliegend bildet der Werkstoff das Strukturelement und den Kleber zu dessen Befestigung am Glas in einem.

Dieser Werkstoff wird bevorzugt so gewählt, dass er eine ausreichend hohe Klebekraft in Kombination mit dem Brillenglasmaterial besitzt, nach dem Auftragen nur langsam oder bevorzugt gar nicht mehr verläuft und nach dem Auftrag bevorzugt in kurzer Zeit zumindest soweit aushärtbar ist, dass sich die aufgetragende Geometrie nicht mehr verändert.

Erfindungsgemäß kann es vorgesehen sein, als Werkstoff ein in flüssiger Phase vorliegendes Polymer zu verwenden, das nach dem Auftragen mittels Lichtstrahlung geeigneter Wellenlänge {z.B. UV-Licht) oder einer chemischen Reaktion in die feste Phase überführt wird.

Um ein Verlaufen des flüssigen Werkstoffes auf dem Glas zu vermeiden, kann es vorgesehen sein, dass der Werkstoff direkt nach dem Auftrag oder sogar bereits bei dem Auftrag mit Licht zur Aushärtung bestrahlt wird. Bei einer zur Härtung verwendeten chemischen Reaktion kann die Reaktionsgeschwindigkeit in Abhängigkeit der Auftragsgeschwindigkeit so gewählt werden, dass direkt nach dem Auftragen eine derart weite Erhärtung stattgefunden hat, die ein Zerfließen verhindert. Hierfür kann es beispielsweise vorgesehen sein, einen Werkstoff aus wenigstens zwei Komponenten in einer Mischdüse erst unmitteltbar örtlich vor der Düsenöffnung zu vermischen.

Eine bevorzugte Ausführungsform kann es auch vorsehen, einen flüssigen Werkstoff, insbesondere ein flüssiges Polymer einzusetzen, das die Eigenschaften eines nicht-newtonschen Fluids besitzen, insbesondere, wenn es sich struturviskos verhält.

Nicht-newtonsche, insbesondere strukturelementviskose Flüssigkeiten, z.B. Polymere verringern mit steigender Scherrate ihre Viskosität und lassen sich daher gut auftragen, insbesondere beim Auftragen einer Formgebung unterziehen, z.B. wenn ein Auftrag durch eine formdefinierende Düse erfolgt. Beim Auftragen durch die Düsenöffnung wirkt eine hohe Scherrate und die Flüssigkeit hat eine vergleichsweise geringe Viskosität. Sinkt die Scherrate nach dem Auftrag, also wenn die Flüssigkeit auf dem Brillenglas appliziert ist, so steigt die Viskosität wieder an, das Fluid ist formstabiler und verläuft nicht oder nur langsam, d.h. mit hinreichend großer Zeitkonstante, um in der applizierten Form oder zumindest sehr nahe der applizierten Form ausgehärtet zu werden / sein.

Eine mögliche Ausführung der Erfindung kann es vorsehen, dass das wenigstens eine Strukurelement bzw. jeder Teil eines mehrteiligen Strukturelements in jeweils einem einzigen Auftragsschritt erzeugt wird. In einem solchen Auftragsschritt kann z.B. ein formdefinierter Tropfen oder ein formdefinierter Strang des flüssigen Werkstoffes aufgetragen und gehärtet werden. Die Formdefinition des später verfestigten Strukturelements kann hierbei beispielsweise durch die Querschnittsform bzw. Öffnungsform der Düse erfolgen, durch die hindurch der Auftrag erfolgt.

Eine andere Ausführung kann es auch vorsehen, dass das wenigstens eine Strukturelement bzw. jeder Teil eines mehrteiligen Strukturelements hergestellt wird bzw. hergestellt ist in mehreren aufeinander folgenden Auftragsschritten, wobei in jedem Auftragsschritt ein Tropfen oder ein Strang des flüssigen Werkstoffes aufgetragen wird, ggfs. mit einer durch die Düse erfolgten Formdefinition. Ein solches Auftragen stellt für das Strukturelement bzw. den jeweiligen Teil ein dreidimensionales generatives, additives Fertigungsverfahren dar, bei dem das endgültige Strukturelement bzw. der Teil hiervon erst nach Beendigung des letzten von mehreren Auftragsschritten fertig gestellt ist und in der Form definiert ist durch die Aneinander-Anordnung der Tropfen und/oder Stränge.

Es kann dabei vorgesehen sein, nach jedem Auftragsschritt den jeweils aufgetragenen Tropfen oder Strang zu härten, z.B. durch Bestrahlung oder chemische Reaktion oder alternativ eine Härtung erst vorzunehmen, nachdem alle Auftragsschritte abgeschlossen sind, insbesondere wobei sodann die Härtung bevorzugt durch Bestrahlung mit Licht erfolgt, das auf alle aufgetragenen Tropfen und/oder Stränge gleichzeitig wirkt.

Die Stränge und/oder Tropfen können prinzipiell auch bei jedem oder zumindest einem Teil der mehreren Auftragsschritten mit unterschiedlichen Querschnitten erzeugt werden, insbesondere dann je nach gewünschter Geometrie des Strukturelements zueinander positioniert werden.

Auf diese Weise entstehen geometrisch weitgehend frei definierbare Strukturelemente, insbesondere bei Verwendung von Tropfen kleiner Größe. Ein Strukturelement kann so generativ und additiv z.B. aus einer Vielzahl gleicher oder aus verschieden großen Tropfen und/oder Strängen in drei Dimensionen zusammengesetzt werden. In einem solchen Fall sind die erzeugten Tropfen oder Stränge zumindest formgleich ggfs. bis auf unterschiedliche Querschnitte, so dass sich die Form des Strukturelements durch die relative Anordnung der Tropfen und/oder Stränge zueinander auf dem Brillenglas ergibt.

Durch die hierdurch erzielte Geometrienvariabilität kann das Verfahren sehr schnell computergesteuert auf unterschiedliche Brillenfassungstypen mit den zugehörigen Strukturelementen umgestellt werden. Ein Werkzeugwechsel bzw. Düsenwechsel ist in diesem Fall nicht notwendig.

Im Unterschied zu den vorbekannten Verfahren, wie sie in dem Patent DE 100 50 007 C2 beschrieben werden, erlaubt das erfindungsgemäße Verfahren die Variation der Profilquerschnitte über den Umfang des Glases.

Zum Beispiel kann es vorgesehen sein, die Elastizität eines Strukturelements durch Änderung der Querschnittsgeometrie ortsabhängig zu variieren, z.B. um möglichst geringe Fertigungsgenauigkeiten für die Herstellung von Fassung und Glasrand, bei gleichzeitiger Spielfreiheit der Verbindung, zu erreichen.

Weiterhin ermöglicht das erfindungsgemäße Verfahren Strukturelemente zur Befestigung eines Glases an einer Fassung nur in den Bereichen des Glasrandes zu platzieren, wo sie für die Erzielung einer optimalen Verbindung notwendig sind. Die Positionierung und die lokale Querschnittsgeometrie kann dabei bevorzugt computergesteuert in Abhängigkeit von der Form des Glasausschnitts in der Fassung und/oder der Randstärke und/oder - kurven des einzusetzenden Glases, der Fassungskurve sowie des Glas- und Fassungsmaterial berechnet werden.

In Abhängigkeit von der Brillenfassung können unterschiedliche Strukturelementen erzeugt werden, die eine optimale Verbindung für den jeweiligen Fall ermöglichen.

Das erfindungsgemäße Verfahren kann eingesetzt werden, um Strukturelemente auf Brillengläsern mit unterschiedlichen Funktionalitäten oder zu erreichenden Zielen zu applizieren.

Z.B. kann es vorgesehen sein, durch die erfindungsgemäß ausgebildeten Strukturelemente Befestigungsstrukturen auszubilden, die dazu dienen, ein Brillenglas mit einer Fassung oder auch mit einem anderen Brillenglas zu verbinden bzw. eine Aneinander-Befestigung zu erzielen.

So kann es vorgesehen sein mit wenigstens einem Strukturelement am Rand eines Brillenglases eine Facette oder sonstige Befestigungsstruktur auszubilden, die der Befestigung in der Fassung dient.

Ein Beispiel eines zwei Brillengläser verbindenden Strukturelementes ist der Nasensteg. Hier kann es vorgesehen sein, dass ein einzelnes Strukturelement mit dem erfindungsgemäßen Verfahren hergestellt wird, welches gleichzeitig beide zu verbindenden Brillengläser kontaktiert.

Eine andere Ausführung kann vorsehen, am ersten Brillenglas ein erstes Strukturelement zu bilden und am zweiten Brillenglas ein zweites Strukturelement zu bilden, wobei die beiden Strukturelemente aneinander befestigbar sind bzw. miteinander verbindbar sind und nach Verbindung / Befestigung einen Nasensteg ausbilden. Z.B. können die beiden Strukturelemente eine lösbare Verbindung ausbilden, z.B. eine Rast- oder Schnappverbindung. In den beiden genannten Fällen bildet ein Strukturelement sowohl eine Befestigungsstruktur als auch eine Tragstruktur, welche das Tragen einer Brille durch den Nutzer unterstützt.

Ein weiteres als Tragstruktur zu bezeichnendes Strukturelement kann erfindungsgemäß gefertigt werden und durch seine Formgebung ein jeweiliges Nasenpad ausbilden, mit dem ein Brillenglas oder die ganze Fassung an der Nase abgestützt ist.

Ebenso können erfindungsgemäß Schutzstrukturen an einem Brillenglas angeordnet werden. Z.B. ist es bekannt, dass der Glasrand eines Brillenglases negativer Dioptrien sehr scharf sein kann und gemäß dem Stand der Technik zur Vermeidung von Verletzungsgefahren mit einer Fase versehen wird.

Erfindungsgemäß kann es vorgesehen sein ein vor Verletzungen schützendes Strukturelement am Glas, insbesondere einer Kante des Brillenglasrandes anzuordnen, insbesondere an der zum Gesicht weisenden Kante. Eine solche Schutzstruktur kann z.B. die beschriebene scharfe Kante umschließen und so "entschärfen".

Am Beispiel der weitverbreiteten Fassungstypen Vollrandfassung und Nylorfassung sollen mögliche Ausführungsformen von Strukturelementen erläutert und dargestellt werden, die der Befestigung zwischen Brillenglas und Fassung dienen. Weitere Ausführungen zeigen tragende oder schützende Strukturelemente. Es zeigen:
- Fig. 1:: eine Vorderansicht einer Brillenfassung,
- Fig. 2A + 2B:: die Form einer Vielzahl möglicher Profilquerschnitte von Strukturelementen, aus einem oder mehreren Strängen
- Fig. 3:: Strukturelementen auf Front- oder Rückfläche z.B. als Ersatz der Bohrungen bei Bohrfassungen
- Fig. 4:: U-förmiges Strukturelement mit variabler Höhe
- Fig. 5:: Strukturelementen auf Front- und Rückfläche jeweils im Randbereich zur Ausbildung von einclipsbaren Rast-Verbindungen zwischen Fassung und Glas
- Fig. 6:: Ein Strukturelement für eine Nylorfassung
- Fig. 7:: auf dem Rand aufgebrachte und axial über die Front- und/oder Rückfläche des Glases sich erstreckende Strukturelementen z.B. für Clipverbindungen
- Fig. 8:: die Applikation mehrerer Einzelstränge zur Ausbildung einer Strukturelements aus der Gesamtheit aller Stränge
- Fig. 9:: die Applikation mehrerer Einzeltropfen zur Ausbildung eines Strukturelements aus der Gesamtheit aller Tropfen
- Fig. 10:: ein Strukturelement zur Bildung eines Nasenstegs
- Fig. 11:: Strukturelemente zur Bildung von Nasenpads
- Fig. 12:: Strukturelemente zum Schutz vor Verletzungen

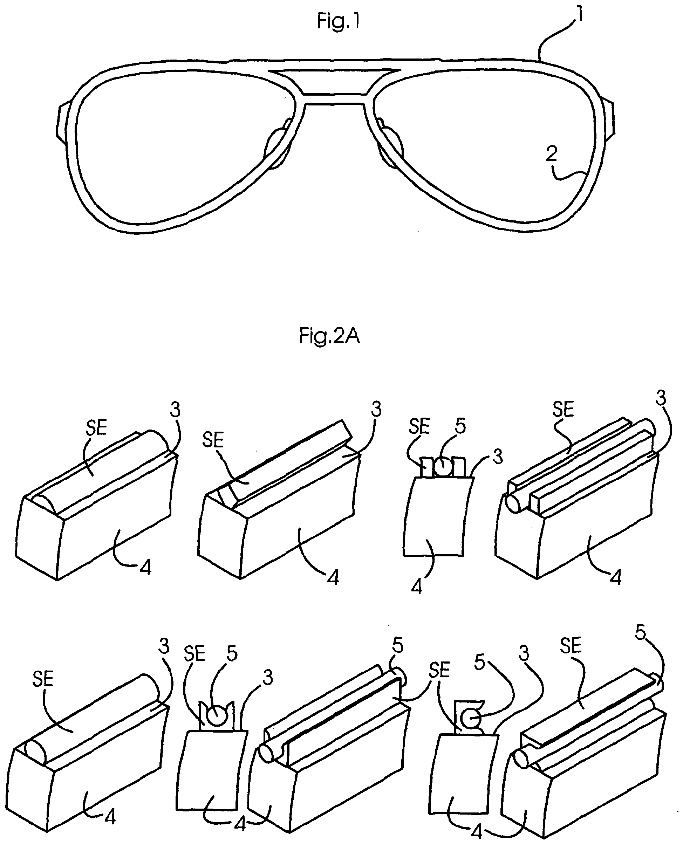

Figur 1 zeigt eine Vollrandfassung 1 die an der Randinnenseite 2 eine vorbestimmte hier nicht gezeigt Formgeometrie aufweist, meist eine Facette zur Aufnahme einer korrespondierenden Geometrie am Rand 3 eines Brillenglases 4 passender Form.

Für eine solche Fassung können am Rand 3 eines Brillenglases 4 entsprechende Strukturelemente SE angeordnet werden, die entweder der Form des Fassungsrandes entsprechen oder sich daran anpassen aufgrund einer Flexibilität.

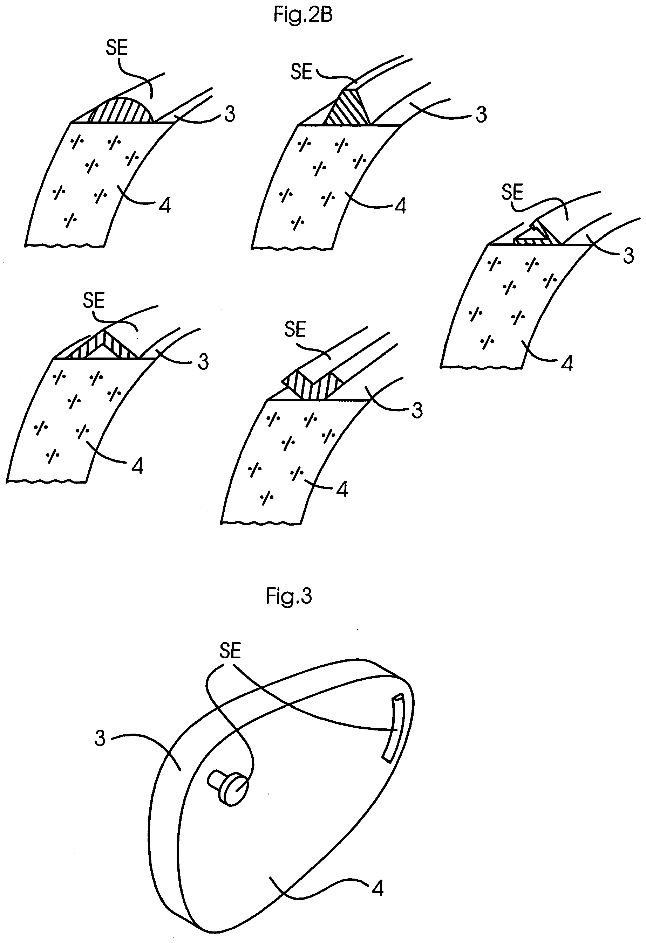

Die Figuren 2A und B zeigen eine Vielzahl von möglichen Formen von Strukturelementen SE, die vorgesehen sind, am Glasrand 3 eines Brillenglases 4 aufgetragen zu werden, wie es eingangs beschrieben wurde. Die Formen 1,2 und 4 der Figur 2A und die Formen der Figur 2B sind dabei geeignet in einer Vollrandfassung verwendet zu werden.

Die Formen 3, 5 und 6 der Figur 2A zeigen Strukturelemente SE, die vorgesehen sind, Nylor-Fäden 5 aufzunehmen. Hierfür bilden diese für sich selbst oder zumindest in Verbindung mit dem Rand Aufnahmenuten, in die der Faden 5 einlegbar ist.

Die Figur 3 zeigt Strukturelemente SE, die erhaben auf einer Frontfläche und/oder einer Rückfläche eines Brillenglases 4 angeordnet werden, z.B. um Bohrfassungen zu ersetzen.

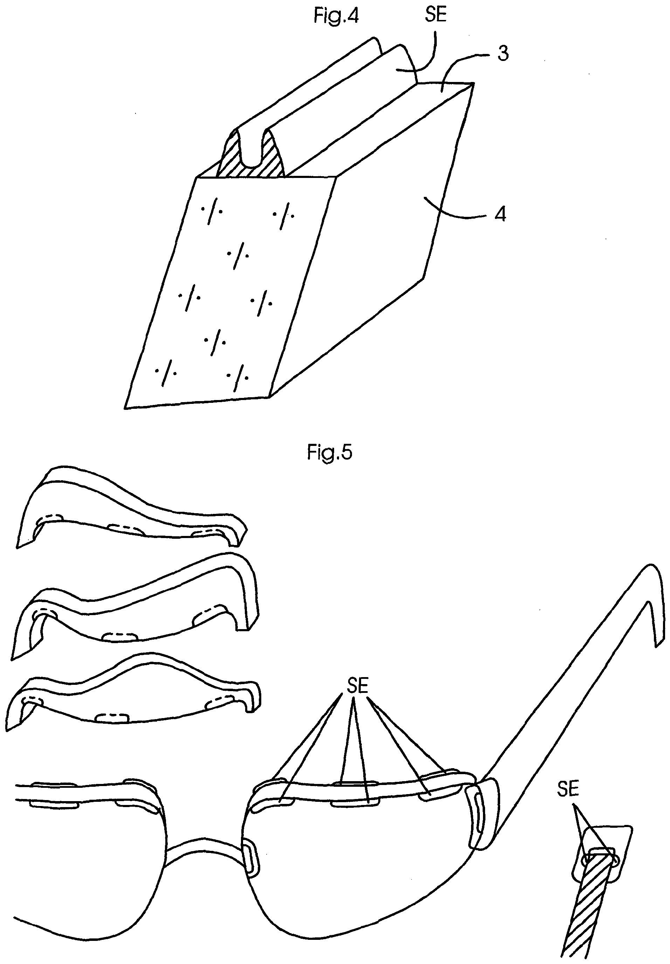

Für eine Vollrandfassung kann beispielhaft weiterhin ein Strukturelement SE in Form einer U-Geometrie (senkrecht zur Umfangsrichtung) mit z.B. flexiblen, z.B. sich radial nach außen verjüngenden Schenkeln gewählt werden, wie es beispielsweise Figur 4 zeigt. Diese Geometrie wird bevorzugt nicht auf dem gesamten Umfang, sondern nur teilweise, z.B. an Stellen angebracht, die für ein spannungsfreies Halten des Glases besonders wichtig sind. Durch eine weiterhin bevorzugte Variation der Schenkelhöhe kann auch die unterschiedliche lokale Nachgiebigkeit des Fassungsrandes berücksichtigt werden. Z.B. weicht der Fassungsrand im Bereich von geraden Bereichen schon bei geringer Belastung aus, so dass hier eine geringere Nachgiebigkeit der Strukturelemente SE vorteilhaft ist.

Gemäß Figur 5 sind randnah Strukturelemente SE angebracht, die in axialer Richtung (bzgl. optischer Achse) über die Front- und/oder Rückfläche des Brillenglases 4 überstehen und dazu dienen eine Rastverbindung zwischen Fassung und Glas zu bilden.

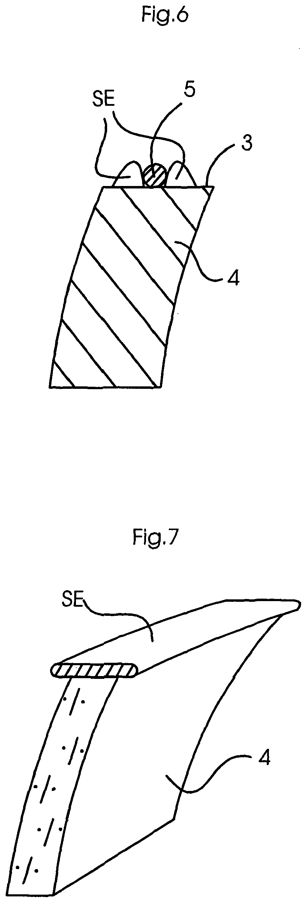

Bei einer Nylorfassung kann der Faden 5, der das Glas mit der Fassung verbindet, beispielhaft durch die in Fig. 6 gezeigte Ausführungsform gehalten werden. Hier ist ein jeweiliges Strukturelement SE durch zwei Teile ausgebildet, nämlich zwei Stränge, die mit Abstand zueinander auf dem Glasrand 3 angeordnet sind. Auch in diesem Fall wird das Strukturelement SE bevorzugt nur partiell auf dem Rand 3 aufgebracht.

Figur 7 zeigt wiederum ein axial sich über die Front- bzw. Rückfläche hinaus erstreckendes Strukturelement SE, das jedoch vollständig am Rand 3 befestigt ist.

Vollkommen neue Möglichkeiten eröffnet das beschriebene Verfahren bzgl. der Verbindung von Glas und Brillenfassung durch das computergesteuerte, präzise Aufbringen von Strukturelementen SE, deren Geometrie weitgehend frei definiert werden kann aus einer Vielzahl von einzelnen Strängen oder Tropfen,.

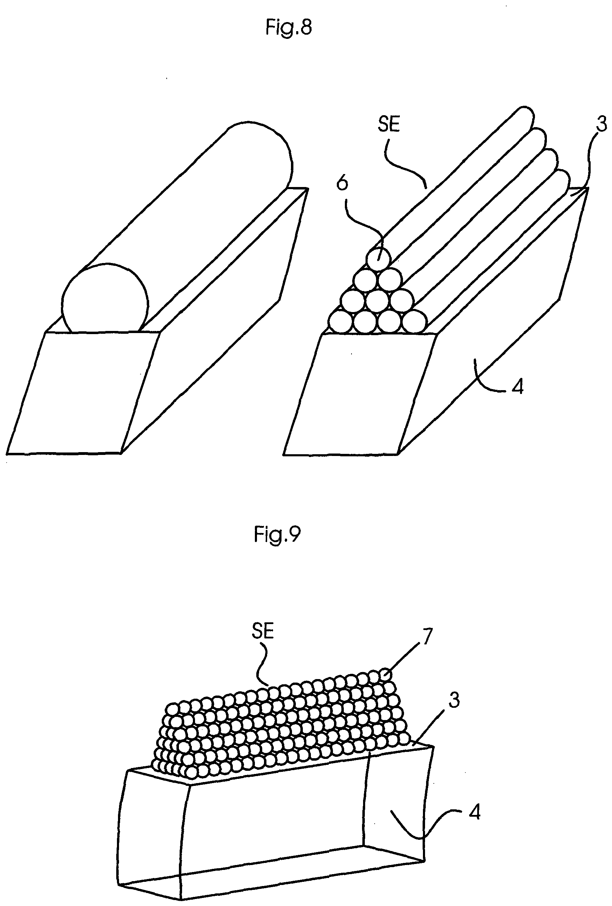

Figur 8 visualisiert, dass ein Strukturelement SE aus mehreren Einzelsträngen 6, von z.B. im Wesentlichen kreisförmigen Strängen aufgebaut wird durch eine schrittweises Auftragen der Stränge auf- und/oder nebeneinander. Hier wird durch mehrere Stränge ein im Querschnitt dreieckiges Strukturelement erzielt.

Figur 9 zeigt eine im Wesentlichen gleiche Querschnittsform des Strukturelements SE, jedoch aufgebaut aus einer Vielzahl einzelner Tropfen 7. Hier sind die jeweils gleichgroßen Tropfen 7 in drei Dimensionen auf und nebeneinander angeordnet, um insgesamt das gewünschte Strukturelement SE zu bilden.

Aus der großen Zahl von Möglichkeiten sollen beispielhaft drei weitere mögliche Ausführungen von Strukturelementen SE näher beschrieben werden ohne die Erfindung auf diese Möglichkeiten zu beschränken.

Eine Anwendung des erfindungsgemäßen Verfahrens kann die Herstellung von Strukturelementen SE auf dem Glasrand 3 oder der Glasfront oder Rückfläche sein, die radial ausgerichtet sind, also sich über den Glasrand 3 nach außen erstrecken und tragende oder glasverbindende Funktion haben.

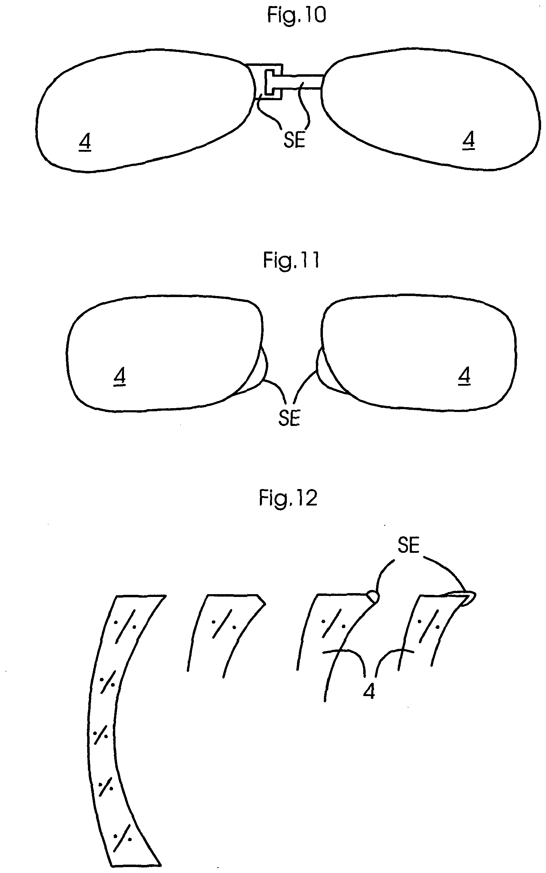

Figur 10 zeigt eine mögliche Ausführungsform. Diese Strukturelemente SE können Teile einer insbesondere konventionellen Brillenfassung ersetzen bzw. Brillenfassungsteile selbst ausbilden und erlauben neue Designs. Im gezeigten Beispiel der Figur 10 ersetzen die vornehmlich radial aufgebrachten Strukturelemente SE den Brückensteg zwischen zwei Gläsern bzw. gemäß Figur 11 das Nasenpad.

Eine weitere Anwendung ist das Aufbringen von schützenden Strukturelementen SE gemäß Figur 12 auf den hinteren und /oder vorderen Rand des Glases. Diese Stelle am Glas besitzt geometriebedingt häufig eine hohe Schärfe, die bislang durch das Anschleifen einer Schutzfacette gemindert und so die Verletzungsgefahr reduziert wird. Die Schutzwirkung kann durch das Aufbringen eines Strukturelementes SE z.B. als elastische Schutzschicht ganz wesentlich verbessert werden.

## Patentansprüche

1. Verfahren zur Verglasung einer Brillenfassung, bei dem auf ein fassungsloses Brillenglas (4) zum Zweck der Verbindung des Brillenglases (4) mit einer Fassung wenigstens ein Strukturelement (SE) befestigt wird, **dadurch gekennzeichnet, dass** zur Bildung des wenigstens einen Strukturelements (SE) auf das Brillenglas (4) ein in flüssiger Phase vorliegender Werkstoff aufgetragen wird, der sich mit dem Glas (4) stoffschlüssig verbindet und durch chemische Reaktion oder durch Bestrahlung mit elektromagnetischen Wellen gehärtet wird, wobei der Werkstoff das wenigstens eine Strukturelement und den Kleber zu dessen Befestigung am Glas in einem bildet und wobei das wenigstens eine Strukturelement oder jeder Teil eines mehrteiligen Strukturelementes in einem einzigen Auftragsschritt erfolgt, in welchem ein formdefinierter Tropfen oder formdefinierter Strang des flüssigen Werkstoffes durch eine Düse aufgetragen und gehärtet wird und die Formdefinition des verfestigten Strukturelementes durch die Querschnittsform oder Öffnungsform der Düse erfolgt oder in mehreren aufeinander folgenden Auftragsschritten, wobei in jedem Auftragsschritt ein Tropfen oder ein Strang des flüssigen Werkstoffes aufgetragen wird und nach jedem Auftragsschritt der jeweils aufgetragene Tropfen oder Strang gehärtet wird, wobei Strukturelemente in den Bereichen des Glasrandes platziert werden und die Positionierung und die lokale Querschnittsgeometrie computergesteuert berechnet wird
a. in Abhängigkeit von der Form des Glasausschnitts in der Fassung und/oder
b. der Randstärke und/oder
c. der Randkurven des einzusetzenden Glases, der Fassungskurve sowie des Glas- und Fassungsmaterials.

2. Verfahren nach Anspruch 1, **dadurch gekennzeichnet, dass** als Werkstoff ein Polymer mit scherkraftabhängiger Viskosität aufgetragen wird.

3. Verfahren nach einem der vorherigen Ansprüche 1 oder 2, **dadurch gekennzeichnet, dass** der Werkstoff durch Bestrahlung mit UV-Licht gehärtet wird.

4. Verfahren nach einem der vorherigen Ansprüche, **dadurch gekennzeichnet, dass** zur Bildung eines Strukturelements (SE) oder eines Teils eines mehrteiligen Strukturelements (SE) mehrere Stränge (6) und/oder Tropfen (7) des Werkstoffes neben und/oder übereinander aufgetragen werden.

5. Verfahren nach Anspruch 4, **dadurch gekennzeichnet, dass** der Auftrag mehrerer Tropfen (7) und/oder Stränge (6) computergesteuert in Abhängigkeit einer vorprogrammierten Endform eines Strukturelements (SE) erfolgt.

6. Verfahren nach einem der vorherigen Ansprüche, **dadurch gekennzeichnet, dass** die Querschnittgeometrie und / oder die Verteilung des Strukturelements (SE) über den Umfang des Brillenglases (4) auf Basis der Form des Glasausschnitts in der Brillenfassung (1) computergesteuert ermittelt werden.

7. Verfahren nach einem der vorherigen Ansprüche, **dadurch gekennzeichnet, dass** das Strukturelement (SE) so ausgebildet wird, dass es in die Facettennut einer Brillenfassung eingreift und/oder den Faden einer Nylorfassung aufnimmt oder eine clipsbare Verbindung mit der Fassung realisiert.

## Claims

1. Method for fitting a lens in a spectacle frame, in which method at least one structural element (SE) is secured on a frameless spectacle lens (4) in order to connect the spectacle lens (4) to a frame, **characterized in that**, in order to form the at least one structural element (SE), a material present in a liquid phase is applied to the spectacle lens (4), which material bonds cohesively to the lens (4) and is hardened by chemical reaction or by irradiation with electromagnetic waves, wherein the material forms all in one the at least one structural element and the adhesive for securing same to the lens, and wherein the at least one structural element or each part of a multi-part structural element is applied in a single application step, in which a bead of defined shape or a strand of defined shape of the liquid material is applied through a nozzle and hardened and the shape of the solidified structural element is defined by the cross-sectional shape or orifice shape of the nozzle, or in a plurality of successive application steps, wherein in each application step a bead or a strand of the liquid material is applied and after each application step the respective applied bead or strand is hardened, wherein structural elements are placed in the regions of the lens edge, and the positioning and the local cross-sectional geometry is calculated under computer control
a. as a function of the shape of the lens cutout in the frame and/or
b. the edge thickness and/or
c. the edge curves of the lens to be inserted, the frame curve and the material of the lens and frame.

2. Method according to Claim 1, **characterized in that** the material applied is a polymer with a viscosity that is dependent on shear force.

3. Method according to one of Claims 1 and 2, **characterized in that** the material is hardened by irradiation with UV light.

4. Method according to one of the preceding claims, **characterized in that**, in order to form a structural element (SE) or a part of a multi-part structural element (SE), a plurality of strands (6) and/or beads (7) of the material are applied next to and/or above one another.

5. Method according to Claim 4, **characterized in that** the application of a plurality of beads (7) and/or strands (6) takes place under computer control as a function of a pre-programmed final shape of a structural element (SE).

6. Method according to one of the preceding claims, **characterized in that** the cross-sectional geometry and/or the distribution of the structural element (SE) about the circumference of the spectacle lens (4) are/is determined under computer control on the basis of the shape of the lens cutout in the spectacle frame (1).

7. Method according to one of the preceding claims, **characterized in that** the structural element (SE) is configured such that it engages in the facet groove of a spectacle frame and/or receives the cord of a Nylor frame or forms a clip-on connection to the frame.

## Revendications

1. Procédé de pose de verres dans une monture de lunettes, selon lequel au moins un élément structural (SE) est fixé sur un verre de lunette (4) sans monture dans le but d'assembler le verre de lunette (4) avec une monture, **caractérisé en ce que** pour former l'au moins un élément structural (SE), une matière présente en phase liquide est appliquée sur le verre de lunette (4), laquelle s'attache au verre (4) par fusion de matières et est durcie par réaction chimique ou par irradiation avec des ondes électromagnétiques, la matière formant d'un seul tenant l'au moins un élément structural et l'adhésif servant à sa fixation au verre et l'au moins un élément structural ou chaque partie d'un élément structural en plusieurs parties s'effectuant en une étape d'application unique, dans laquelle une goutte à la forme définie ou une ligne de coulée à la forme définie de la matière liquide est appliquée à travers une buse et durcie et la définition de la forme de l'élément structural solidifié s'effectue par la forme de la section transversale ou la forme de l'ouverture de la buse, ou en plusieurs étapes d'application successives, une goutte ou une ligne de coulée de la matière liquide étant appliquée dans chaque étape d'application et la goute ou la ligne de coulée appliquée étant durcie après chaque étape d'application, les éléments structuraux étant placés dans les zones du bord du verre et le positionnement ainsi que la géométrie de section transversale locale étant calculés de manière contrôlée par ordinateur
a. en fonction de la forme de la découpe pour verre dans la monture et/ou
b. de l'épaisseur du bord et/ou
c. de la courbe de bordure du verre à utiliser, de la courbe de la monture ainsi que du matériau du verre et de la monture.

2. Procédé selon la revendication 1, **caractérisé en ce que** le matériau utilisé est un polymère ayant une viscosité dépendante de la force de gravité.

3. Procédé selon l'une des revendications 1 ou 2, **caractérisé en ce que** le matériau est durci par irradiation à la lumière UV.

4. Procédé selon l'une des revendications précédentes, **caractérisé en ce que** plusieurs lignes de coulées (6) et/ou gouttes (7) de la matière sont appliquées les unes à côté des autres et/ou au-dessus des autres en vue de former l'élément structural (SE) ou une partie d'un élément structural (SE) en plusieurs parties.

5. Procédé selon la revendication 4, **caractérisé en ce que** l'application de plusieurs lignes de coulées (6) et/ou gouttes (7) est effectuée de manière contrôlée par ordinateur en fonction d'une forme finale préprogrammée d'un élément structural (SE).

6. Procédé selon l'une des revendications précédentes, **caractérisé en ce que** la géométrie de section transversale et/ou la distribution de l'élément structural (SE) sur le pourtour du verre de lunette (4) sont déterminées de manière contrôlée par ordinateur sur la base de la forme de la découpe pour verre dans la monture de lunettes (1).

7. Procédé selon l'une des revendications précédentes, **caractérisé en ce que** l'élément structural (SE) est configuré de telle sorte qu'il vient en prise dans la rainure de facette d'une monture de lunettes et/ou accueille le filet d'une monture demi-cerclée ou réalise un assemblage enclipsable avec la monture.
